Europäisches Patentamt

(19) European Patent Office

Office européen des brevets

(11) Publication number: **0 266 208 B1**

(12) **EUROPEAN PATENT SPECIFICATION**

(45) Date of publication of patent specification: **12.06.91**　(51) Int. Cl.⁵: **B60H 1/32**

(21) Application number: **87309587.1**

(22) Date of filing: **29.10.87**

(30) Priority: **29.10.86 JP 164918/86 U**

(43) Date of publication of application:
**04.05.88 Bulletin 88/18**

(45) Publication of the grant of the patent:
**12.06.91 Bulletin 91/24**

(84) Designated Contracting States:
**DE FR GB IT SE**

(56) References cited:
**US-A- 4 510 764**

**PATENT ABSTRACTS OF JAPAN, vol. 7, no.
20 (M-188)[1165], 26th January 1983; & JP-
A-57 175 422 (NIPPON DENSO K.K.)
28-10-1982**

**PATENT ABSTRACTS OF JAPAN, vol. 8, no.
61 (M-284)[1498], 23rd March 1984; & JP-A-58
211 909 (DIESEL KIKI K.K.) 09-12-1983**

**PATENT ABSTRACTS OF JAPAN, vol. 9, no.
152 (M-391)[1875], 27th June 1985; & JP-A-60
29 324 (DIESEL KIKI K.K.) 14-02-1985**

**PATENT ABSTRACTS OF JAPAN, vol. 6, no.
157 (M-150)[1035], 18th August 1982; & JP-**

**A-57 74 207 (HITACHI SEISAKUSHO K.K.)
10-05-1982**

(73) Proprietor: **SANDEN CORPORATION
20 Kotobuki-cho
Isesaki-shi Gunma, 372(JP)**

(72) Inventor: **Sato, Kenichiro
416-18 Yoge-machi
Isesaki-shi Gunma 372(JP)**

(74) Representative: **Jackson, Peter Arthur et al
Gill Jennings & Every, 53-64 Chancery Lane
London WC2A 1HN(GB)**

(54) **Automotive air conditioning system.**

Rank Xerox (UK) Business Services

## Description

This invention relates to an automotive air conditioning system having a control device and a compressor with a variable displacement mechanism.

An automotive air conditioning system is normally controlled by a control device in accordance with the change of temperature in the compartment of the automobile. The air conditioning system usually includes a compressor provided with a variable capacity mechanism for compensating for temperature changes in the compartment and to achieve low energy consumption. Therefore, the control device of an automobile air conditioning system controls a magnetic clutch of the compressor and the variable capacity mechanism to make the actual temperature in the compartment and a predetermined temperature the same as one another.

If the automobile is accelerating, a large load acts against the engine. At that time, if the compressor in the automobile air conditioning system is being driven by the engine, an even larger load acts against the engine. In view of this, the control device is provided with a sensor for detecting acceleration and for controlling the compressor. That is, the compressor is turned off during acceleration of the automobile. Because the control device stops the compressor, even if the temperature in the compartment is higher than the predetermined temperature, there is no control over the temperature in the compartment until after the acceleration has stopped.

It is a primary object of this invention to provide an automotive air conditioning system which can maintain temperature-dependent operation of a compressor while the automobile is accelerating.

JP-A-57-175422 and JP-A-58-211909 disclose an air conditioning system for an automobile, comprising a compressor with a variable displacement mechanism for varying the capacity of the compressor, and means for reducing the capacity when the automobile is accelerating; and, according to the invention, such' a system is characterised by an electromagnetic clutch through which the compressor is arranged to be driven and a control device including a temperature detecting means for sensing air temperature, an acceleration detecting means for detecting acceleration of the automobile, and a control means for controlling the variable displacement mechanism of the compressor, the control means including first comparison means for comparing a first predetermined temperature with the detected air temperature and providing, when the air temperature is higher than the first predetermined temperature, a first control signal in the absence of which the electromagnetic clutch is disengaged to stop the compressor, second comparison means for comparing a second predetermined temperature with the detected air temperature in response to the comparison by the first comparison means and the presence of the first control signal, the second comparison means providing, when the air temperature is higher than the second predetermined temperature, a second control signal in the absence of which the variable displacement mechanism changes the capacity of the compressor to a small capacity, and third comparison means responsive to the acceleration detecting means so as to determine whether or not the automobile is accelerating, the arrangement being such that the variable displacement mechanism changes the capacity of the compressor to a small capacity in response to the third comparison means determining that the automobile is accelerating and to a large capacity in response to the third comparison means determining that the automobile is not accelerating.

The invention will now be described with reference to the accompanying drawings, in which:-

Fig. 1 is an electrical circuit diagram of a control device for an automotive air conditioning system in accordance with the invention;

Fig. 2 is a table illustrating the operation of the control device of Fig.1; and,

Fig. 3 is a flow chart illustrating the operation of the control device of Fig. 1.

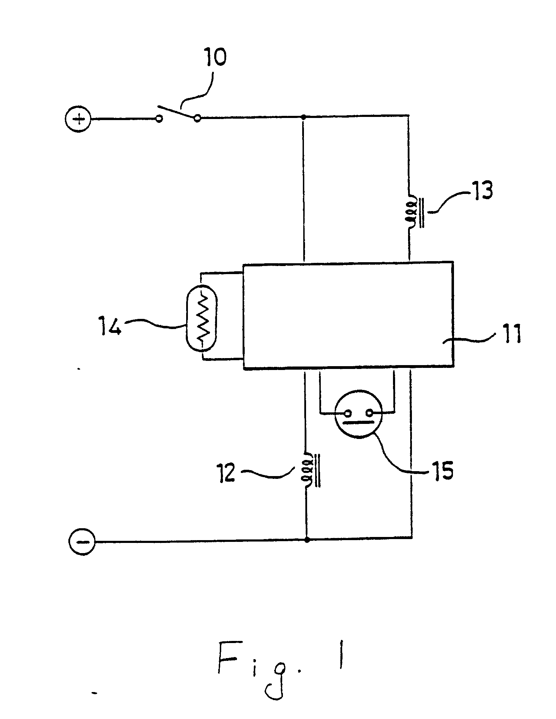

Referring to Fig. 1, the electrical circuit includes an electric power switch 10, a micro-computer 11 and an electromagnetic clutch 12 which is mounted on a compressor (not shown) to control the operation of the compressor. These components are connected in series. A solenoid valve 13 of a variable displacement mechanism (not shown) is connected to the electric power switch 10 and the micro-computer 11 to set the capacity of the compressor. The micro-computer 11 is connected to a thermistor 14 used to detect the air temperature at the outlet of an evaporator (not shown) of the air conditioning system and an acceleration detecting device 15 for detecting acceleration of an automobile and controlling the operation of the air conditioning system. The micro-computer 11 stores a first predetermined temperature T0 as a lowest temperature and a second predetermined temperature T1 as a highest temperature of the air at the outlet side of the evaporator.

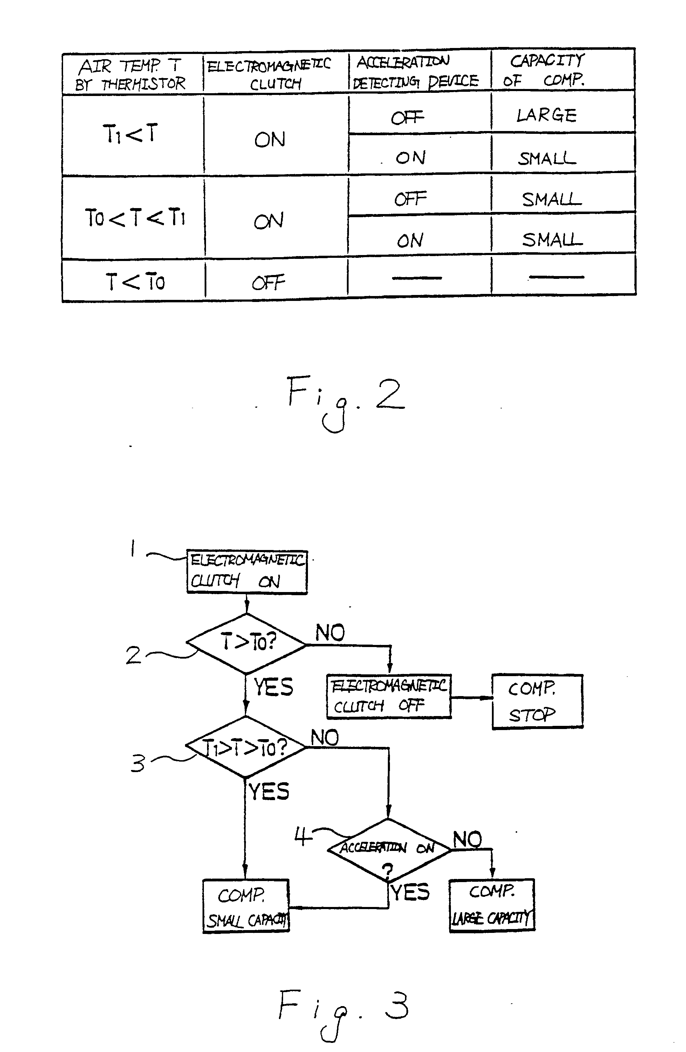

Referring to Figs. 2 and 3, the operation of the automotive air conditioning system and the control device of the compressor will now be described. When the electric power switch 10 closes the circuit, the electromagnetic clutch 12 is energized, as shown in step 1 of Fig. 3, and the compressor operates with a large capacity. Simultaneously, the air temperature T at the outlet of the evaporator is detected by the thermistor 14 and compared with the first predetermined temperature T0 by the micro-computer 11 (step 2). When the air temperature T is lower than the first predetermined temperature T0, the micro-computer 11 turns the electromagnetic clutch 12 off, and operation of the compressor is stopped. If the air temperature T is higher than the predetermined temperature T0, the air temperature T is compared (step 3) with the first predetermined temperature T0 and the second predetermined temperature T1. When the air temperature T is within the range between the first predetermined temperature T0 and the second predetermined temperature T1, the micro-computer 11 controls solenoid valve 13 so that the compressor operates with a small capacity. Otherwise, the micro-computer 11 detects that the air temperature T is higher or lower than the predetemined temperatures T0, T1 and progresses to step 4. In step 4, the micro-computer 11 checks whether or not the acceleration detecting device 15 is turned on. When the acceleration detecting device 15 is turned on, the micro-computer 11 controls the solenoid valve 13 so that the compressor operates with a small capacity. Otherwise, the micro-computer 11 controls the solenoid valve 13 so that the compressor operates with a large capacity.

In this embodiment, the temperature in the compartment of the automobile is suitably controlled so that passagers feel comfortable as a result of the capacity of the compressor being changed in accordance with both the air temperature at the outlet of the evaporator and the operating condition of the acceleration detecting device.

## Claims

1. An air conditioning system for an automobile, comprising a compressor with a variable displacement mechanism for varying the capacity of the compressor, and means for reducing the capacity when the automobile is accelerating; characterised by an electromagnetic clutch (12) through which the compressor is arranged to be driven and a control device including a temperature detecting means (14) for sensing air temperature, an acceleration detecting means (15) for detecting acceleration of the automobile, and a control means (11) for controlling the variable displacement mechanism of the compressor, the control means (11) including first comparison means for comparing a first predetermined temperature (T0) with the detected air temperature (T) and providing, when the air temperature is higher than the first predetermined temperature (T0), a first control signal in the absence of which the electromagnetic clutch (12) is turned off to stop the compressor, second comparison means for comparing a second predetermined temperature (T1) with the detected air temperature (T) in response to the comparison by the first comparison means and the presence of the first control signal, the second comparison means providing, when the air temperature is higher than the second predetermined temperature (T1), a second control signal in the absence of which the variable displacement mechanism changes the capacity of the compressor to a small capacity, and third comparison means responsive to the acceleration detecting means (15) so as to determine whether or not the automobile is accelerating, the arrangement being such that the variable displacement mechanism changes the capacity of the compressor to a small capacity in response to the third comparison means determining that the automobile is accelerating and to a large capacity in response to the third comparison means determining that the automobile is not accelerating.

## Revendications

1. Système de conditionnement d'air pour véhicule automobile, comprenant un compresseur muni d'un mécanisme à déplacement variable pour faire varier la capacité du compresseur, et des moyens pour réduire la capacité lorsque l'automobile est en cours d'accélération, système caractérisé en ce qu'il comprend un embrayage électromagnétique (12) par l'intermédiaire duquel le compresseur doit être entraîné, et un dispositif de commande comprenant des moyens de détection de température (14) pour détecter la température de l'air, des moyens de détection d'accélération (15) pour détecter l'accélération de l'automobile, et des moyens de commande (11) pour commander le mécanisme à déplacement variable du compresseur, les moyens de commande (11) comprenant des premiers moyens de comparaison pour comparer une première température prédéterminée (T0) à la température d'air détectée (T) et pour fournir, lorsque la température d'air est supérieure à la première température prédéterminée (T0), un premier signal de commande en l'absence duquel l'embrayage électromagnétique (12) est coupé pour stopper le compresseur, des seconds moyens de comparaison pour comparer une seconde température prédéterminée (T1) à la température d'air détectée (T) en réponse à la comparaison effectuée par les premiers moyens de comparaison et à la présence du premier signal de commande, les seconds moyens de comparaison fournissant, lorsque la température d'air est supérieure à la seconde température prédéterminée (T1), un second signal de commande en l'absence duquel le mécanisme à déplacement variable change la capacité du compresseur pour la faire passer en petite capacité, et des troisièmes moyens de comparaison répondant aux moyens de détection d'accélération (15) pour déterminer si 'automobile est en cours d'accélération ou non, le disposition étant telle que le mécanisme à déplacement variable change la capacité du compresseur pour la faire passer en petite capacité lorsque les troisièmes moyens de comparaison déterminent que l'automobile est en cours d'accélération, et pour la faire passer en grande capacité lorsque les troisièmes moyens de comparaison déterminent que l'automobile n'est pas en cours d'accélération.

zweite vorbestimmte Temperatur (T1) ist, ein zweites Steuersignal vorsieht, in dessen Abwesenheit der variable Verdrängungsmechanismus die Kapazität des Kompressors zu einer kleinen Kapazität ändert, und eine auf die Beschleunigungserfassungseinrichtung (15) so reagierende dritte Vergleichseinrichtung, daß sie bestimmt, ob das Fahrzeug beschleunigt oder nicht, aufweist und die Anordnung so ausgebildet ist, daß der variable Verdrängungsmechanismus die Kapazität des Kompressors zu einer kleinen Kapazität als Reaktion darauf, daß die dritte Vergleichseinrichtung bestimmt, daß das Fahrzeug beschleunigt, und zu einer großen Kapazität als Reaktion darauf, daß die dritte Vergleichseinrichtung bestimmt, daß das Fahrzeug nicht beschleunigt, ändert.

## Ansprüche

1. Klimaanlage für ein Fahrzeug, mit einem Kompressor mit einem variablen Verdrängungsmsechanismus zum Variieren der Kapazität des Kompressors und einer Einrichtung zum Verringern der Kapazität, wenn das Fahrzeug beschleunigt; gekennzeichnet durch eine elektromagnetische Kupplung (12), durch die der Kompressor so ausgebildet ist, daß er angetrieben werden kann, und eine Steuereinrichtung mit einer Temperaturerfassungseinrichtung (14) zum Erfassen der Lufttemperatur, einer Beschleunigungserfassungseinrichtung (15) zum Erfassen der Beschleunigung des Fahrzeuges und einer Steuervorrichtung (11) zum Steuern des variablen Verdrängungsmechanismus des Kompressors, wobei die Steuervorrichtung (11) eine erste Vergleichseinrichtung zum Vergleichen einer ersten vorbestimmten Temperatur (T0) mit der erfaßten Lufttemperatur (T) und zum Vorsehen, wenn die Lufttemperatur höher als die erste vorbestimmte Temperatur (T0) ist, eines Steuersignales, in dessen Abwesenheit die elektromagnetische Kupplung (12) zum Stoppen des Kompressors abgeschaltet ist, eine zweite Vergleichseinrichtung zum Vergleichen einer zweiten vorbestimmten Temperatur (T1) mit der erfaßten Lufttemperatur (T) als Reaktion auf den Vergleich durch die erste Vergleichseinrichtung und die Anwesenheit des ersten Steuersignales, wobei die zweite Vergleichseinrichtung, wenn die Lufttemperatur höher als die

Fig. 1

| AIR TEMP. T BY THERMISTOR | ELECTROMAGNETIC CLUTCH | ACCELERATION DETECTING DEVICE | CAPACITY OF COMP. |
|---|---|---|---|
| $T_1 < T$ | ON | OFF | LARGE |
| | | ON | SMALL |
| $T_0 < T < T_1$ | ON | OFF | SMALL |
| | | ON | SMALL |
| $T < T_0$ | OFF | — | — |

Fig. 2

Fig. 3